# EUROPÄISCHE PATENTANMELDUNG

(11) **EP 3 048 466 A1**
(43) Veröffentlichungstag der Anmeldung: **27.07.2016**
(21) Anmeldenummer: 16150751.2
(22) Anmeldetag: 11.01.2016
(51) Int. Cl.: G02B 21/33

(54) **VORRICHTUNG UND VERFAHREN ZUR AUSBILDUNG EINES IMMERSIONSMITTELFILMS**

(30) Priorität: 21.01.2015 DE 102015200927
(71) Anmelder: Carl Zeiss Microscopy GmbH, 07745 Jena (DE)
(72) Erfinder: HERRMANN, Hendrik, 82347 Bernried (DE); WISCHNEWSKI, Reinold, 86919 Utting (DE)
(74) Vertreter: Scholze, Humbert

(57) **Zusammenfassung**

Die Erfindung betrifft eine Vorrichtung und ein Verfahren zur Ausbildung eines Immersionsmittelfilms zwischen dem Probenträger (2) und dem Objektiv (1) eines Mikroskops, umfassend ein Autoimmersionsmodul (3) zur Zuführung des Immersionsmittels aus einem Immersionsmittelreservoir (8) auf einen Auftreffort am Probenträger oder am Verfahrtisch, bestehend aus einer, mit einer Düse (5) versehenen, Spritzeinrichtung (4), die mit einer Pumpe (9) zur Erzeugung eines Immersionsmittelstrahls (IMS) verbunden ist.

Dabei wird ein dosierter Immersionsmittelstrahl (IMS) über das Autoimmersionsmodul (3) auf einen Auftreffort auf den Probenträger (2) oder einem Ort am Verfahrtisch mit einer definierten Geschwindigkeit gespritzt.

## Beschreibung

Die Erfindung betrifft eine Vorrichtung und ein Verfahren zur Ausbildung eines Immersionsmittelfilms zwischen dem Probenträger und dem Objektiv eines Mikroskops.

Bekannte Lösungen zur Ausbildung eines Immersionsmittelfilms beruhen meist darauf, dass das Objektiv einen abdichtenden Kragen erhält, der mittels einer fest installierten Zuführung mit Immersionsmittel gefüllt und gegebenenfalls auch entleert wird. Die Ausführung des Kragens ermöglicht einerseits die Ausbildung der Immersion und verhindert andererseits, dass das Immersionsmittel in das Gerät abfließt. Derartige Lösungen werden beispielsweise in WO 2008/028475 A2/A3, US 2010/0027109 A1, DE 101 23 027 B4 und DE102005040828 beschrieben.

In einer Variante nach DE 101 23 027 B4 wird das Medium mittels einer Kanüle in unmittelbarer Nähe der Mikroskopfrontlinse aufgebracht.

US 2006238885A sowie US 2005022731 beschreiben Varianten, bei denen beim Herunterfahren des Objektivs eine Kanüle über die Frontlinse geschwenkt wird. Nachteilig dabei ist, dass kein kontinuierliches Arbeiten möglich ist. Zum anderen entsteht hierbei eine erhöhte Kollisionsgefahr.

Weiterhin haben die bekannten Lösungen den Nachteil, dass bei einer Vergrößerung der Objektivabmessungen Proben nicht mehr vollständig abgefahren werden können, da die Objektive mit dem Rand des Probenhalters kollidieren können. Eine mechanische Beschädigung der filigranen Strukturen ist in diesem Falle leicht möglich.

Üblicherweise vergrößert sich bei Kragenkonstruktionen außerdem der Durchmesser des Immersionstropfens, was ebenfalls zu einem reduzierten Verfahrbereich führt, da der Tropfen eher zwischen Objektiv und Probenhalterahmen kapillieren kann.

Ferner muss für jedes Objektiv ein komplettes Immersionsmodul vorhanden sein. Da die Objektive baulich verändert werden müssen, wird unter anderem das Handling (Einbau/Ausbau/Einstellung) erschwert.

Neben das Objektiv umkragende Konstruktionen, bei denen das Immersionsmittel "eingeschwemmt" wird oder den Lösungen, bei denen direkt über eine Kanüle das Einbringen des Immersionsmittels erfolgt, sind auch Alternativen bekannt, bei denen entweder die komplette Probe überspült wird oder das Objektiv selbst in einen Vorratsbehälter mit Immersionsmittel getaucht wird.

In DE 3122408C2 wird ein Verfahren beschrieben, bei dem ein senkrechter Strahl zur Reinigung eines Ultraschallobjektivs und zum Aufbringen eines Immersionstropfens dient. Die Reinigungsapparatur muss hierbei unter das Objektiv geschwenkt werden, so das kein kontinuierliches Arbeiten möglich ist.

Ausgehend von den Nachteilen der Lösungen des Standes der Technik liegt der Erfindung die Aufgabe zugrunde, ein Verfahren und eine Vorrichtung zur Ausbildung eines Immersionsmittelfilms zwischen dem Probenträger und dem Objektiv eines Mikroskops dahingehend weiter zu bilden, dass ohne eine mechanische Veränderung des verwendeten Objektivs ein verbessertes Handling und ein kontinuierliches Arbeiten mit verschiedenen Objektiven möglich ist.

Diese Aufgabe wird mittels einer Vorrichtung der eingangs beschriebenen Art erfindungsgemäß mit den Merkmalen des Patentanspruchs 1 gelöst. Vorteilhafte Ausgestaltungen sind in den Unteransprüchen 2 bis 9 angegeben. Ferner wird die Aufgabe erfindungsgemäß durch ein Verfahren der eingangs beschriebenen Art mit den im Patentanspruch 10 angegebenen Verfahrensschritten gelöst. Vorteilhafte Verfahrensschritte sind in den Unteransprüchen 11 bis 18 angegeben.

Die erfindungsgemäße Vorrichtung umfasst ein Autoimmersionsmodul zur Zuführung des Immersionsmittels aus einem Immersionsmittelreservoir auf einen Auftreffort am Probenträger oder am Verfahrtisch, bestehend aus einer, mit einer Düse versehenen, Spritzeinrichtung, die mit einer Pumpe zur Erzeugung eines Immersionsmittelstrahls verbunden ist.

In einer vorteilhaften Ausgestaltungsvariante ist die Spritzeinrichtung direkt in der Achse eines Objektivrevolvers angeordnet, so dass diese geschützt ist und die Bedienbarkeit des Mikroskops nicht beeinflusst.

In einer weiteren vorteilhaften Ausgestaltung ist die Spritzeinrichtung außerhalb des Objektivrevolvers am Stativ des Mikroskops befestigt. Bei dieser Variante ist allerdings die Zugänglichkeit des Raums zwischen dem Objektiv und dem Probenträger für den freien Immersionsmittelstrahl Voraussetzung.

In einer weiteren vorteilhaften Ausgestaltung ist zum Zwecke der Vermeidung von Blasen am Auftreffort die Spritzeinrichtung so ausgerichtet, dass der Immersionsmittelstrahl minimal am Strahlengang des Objektivs vorbeiführt.

Zur Variierung des Auftreffortes ist der Probenträger senkrecht zur optischen Achse in x/y-Richtung und der Objektivrevolver in z-Richtung axial beweglich angeordnet.

Durch die Bewegungsmöglichkeiten kann ein Immersionsmitteltropfen durch Spritzen an beliebigen Stellen auf dem Probenträger oder dem Verfahrtisch ausgebildet und durch anschließendes Verändern der Lage des Tisches und des Objektivrevolvers zum Objektiv transportiert werden. Voraussetzungen dafür sind, dass sich der Immersionsmittelstrahl ungebrochen ausbilden kann und der Auftreffort erstens zur Aufnahme eines Immersionsmitteltropfens geeignet ist und zweitens durch Verfahren des Tisches über das Objektiv bewegt werden kann. Nach Herstellung der Immersion erfolgt abschließend die Positionierung in das zu untersuchende Probenareal. Der Immersionsmitteltropfen verbleibt dabei im Immersionsspalt. Diese Variante hat allerdings den Nachteil, dass kein kontinuierliches Arbeiten möglich ist.

Vorteilhafterweise sind die Pumpe und die Düse zum Zwecke der Variierung des Immersionsmittelstrahls in der Dosierung und der Geschwindigkeit des Immersionsmittelstrahls justierbar. Die Einstellung erfolgt so, dass sich der erforderliche Fluss ausbildet und die Tropfen des Immersionsmittelstrahls mit möglichst geringer Geschwindigkeit aus der Düse austreten. Andererseits muss eine Mindestgeschwindigkeit erreicht werden um sicherzustellen, dass keine ungewollte Kollision mit dem Objektiv durch eine zu starke Krümmung des Immersionsmittelstrahls eintritt.

In einer weiteren vorteilhaften Ausgestaltung ist zur manuellen Auslösung des Immersionsmittelstrahls, ein Betätigungselement vorgesehen, das eine definierte Menge vom Immersionsmittel einspritzt.
Diese Funktion kann auch als Softbutton auf der Oberfläche eines Touchdisplays zur Steuerung der Mikroskopfunktionen oder durch ein entsprechendes Element in der Bediensoftware eines angeschlossenen Rechners realisiert werden.

Zur automatisierten Auslösung des Immersionsmittelstrahls ist das Autoimmersionsmodul mit einer Steuereinheit verbunden, die beispielsweise als Mikrocontroller ausgebildet sein kann.

In Verbindung mit der Gestaltung der Vorrichtung wird mit dem erfindungsgemäßen Verfahren ein dosierter Immersionsmittelstrahl auf einen Auftreffort auf den Probenträger oder einem Ort am Verfahrtisch mit einer definierten Geschwindigkeit gespritzt, ohne dabei eine mechanische Veränderung am Objektiv vorzunehmen, wodurch auch das Handling, wie beispielweise Ein- und Ausbau von Objektiven und die Funktionalität des Stativs beim kontinuierlichen Arbeiten mit verschiedenen Objektiven gegenüber den Lösungen des Standes der Technik verbessert wird.
Der unmittelbare Bauraum rund um das Objektiv wird nicht angetastet.

Als Folge wird der Tisch-Verfahrbereich und damit die beobachtbare Probenfläche in keiner Weise eingeschränkt.

Als weitere Folge kann es nicht zu Kollisionen kommen, die zur Beschädigung der im allgemeinen filigranen Strukturen der jeweiligen Immersionsapparate führen könnten. Entsprechend robust ist das Verfahren.

Der Aufbau erlaubt ein kontinuierliches Arbeiten mit verschiedenen Objektiven einer Objektivrevolverbestückung. Eine Nachrüstung bestehender Systeme ist einfach und schnell zu bewerkstelligen.

Das Immergieren erfolgt zweckmäßigerweise in der Fokuslage des Objektivs.

Bei Objektiven mit einem geringen Arbeitsabstand wird der Immersionsmittelstrahl vor der optischen Achse auf das

Objektiv und den Probenträger gespritzt und kapilliert anschließend in den Immersionsspalt.

Bei Objektiven, deren Bauform ein direktes Einspritzen in den Immersionsbereich nicht zulässt, wird zunächst ein Objektiv geringerer Bauhöhe oder eine leere Position des Objektivrevolvers in die optische Achse geschwenkt und anschließend eine geringen Dosis des Immersionsmittels auf das Deckglas aufgebracht. Nach der Rückpositionierung des zu verwendenden Objektivs in die Fokuslage stellt sich die Immersion dann automatisch ein.

Ein verfahrensbedingtes Problem stellt die mögliche Erzeugung von Luftblasen im Immersionsmittel durch den Spritzvorgang dar, das durch verschiedene Maßnahmen minimiert werden kann:
- Optimierung der Pumpenparameter Druck, Spritzdauer beziehungsweise Spritzmenge sowie Wiederholfrequenz.
- Vorbehandlung des Mediums:
   ∘ Bei Verwendung von Wasser kann die Zugabe eines Entschäumungsmittels, wie beispielsweise Isoamylalkohol, ein Auftreten von Blasen im Inneren der Immersionssäule verhindern.
   ∘ Ebenfalls bei Wasser ist eine Entkarbonisierung sinnvoll.
   ∘ Vorteilhaft ist auch Entgasung mittels Unterdrucks.
- Das Spritzen des Immersionsmittels in den aus Objektivkegel und Probenträger gebildeten Spalt vor der optischen Achse verursacht weniger Blasen als das direkte Spritzen an den Probenträger. Falls Blasen entstehen, dann vorwiegend gegen Ende des Spritzvorgangs und damit weit entfernt von der optischen Achse. Wenn das Medium anschließend in den Raum zwischen Objektivlinse und Probenträger kapilliert, bildet sich eine weitgehend blasenfreie Immersion aus.

Zum Zwecke der Beseitigung von Blasen im Immersionsmittel kann der Abstand zwischen Objektiv und Probenträger vergrößert werden, wobei die Immersionssäule gestreckt und eingeschnürt werden. Frei im Medium befindliche Blasen werden durch diese Maßnahme an den Rand der Säule gedrängt und platzen beim Durchtritt durch die Grenzfläche. Ein Zerreißen der Immersionssäule ist dabei unproblematisch. Bei Rückpositionierung in die Fokuslage wird die Immersion automatisch wieder aus den beiden an Objektiv und Probenträger haftenden Restmengen hergestellt.

Blasen, die am Probenträger haften, sind ortsfest. Sie werden nur durch Verlassen der Immersionssäule zerstört. Um dies zu erreichen, sind mehrere Verfahren denkbar:
Bei Verfahren des Tisches um den Durchmesser der Immersionssäulengrundfläche am Probenträger werden alle Blasen aus der zwischen Probenträger und Objektiv fixierten Immersionssäule herausgezogen.

Das Ausdrehen des Objektivrevolvers um ca. 10° führt zum selben Resultat. Die Immersionssäule wandert mit dem ausdrehenden Objektiv und streift dabei die am Probenträger befindlichen Blasen ab. Zusätzlich wird durch den zunehmenden Abstand zwischen Probe und Objektiv die Grundfläche der am Probenträger anhaftenden Immersionssäule verkleinert.

Sinnvoll ist eine Kombination der obigen Verfahren. Nach Streckung der Immersionssäule und der damit verbundenen Entfernung frei beweglicher Blasen verringert sich mit dem Durchmesser der Immersionssäulengrundfläche die zum Entfernen der am Probenträger anhaftenden Blasen benötigte Verfahrstrecke.

Grundsätzlich können Blasen auch mittels Ultraschall entfernt werden.

Voraussetzung für den sicheren Betrieb ist außerdem der luftfreie Zustand des Schlauchsystems. Vor der Verwendung des Autoimmersionsmoduls muss daher durch geeignete Pumpvorgänge gesorgt werden, dass alle Luft aus dem Schlauch/Pumpesystem ausgetrieben wird. Zu diesem Zweck existieren optimierte Ansteuerverfahren für die Pumpe. Wenn zudem der Pumpendruck so niedrig eingestellt wird, dass sich kein Freistrahl ausbildet, sondern das Immersionsmittel austropft, wird die Gefahr einer Verschmutzung des Stativs minimiert, sofern eine Auffangvorrichtung montiert ist.

Anhand eines Ausführungsbeispiels soll die erfindungsgemäße Vorrichtung näher erläutert werden. Dazu zeigen:
- Figur 1:: eine schematische Darstellung der Vorrichtung,
- Figur 2:: eine schematische Darstellung der Vorrichtung mit der Anordnung der Spritzeinrichtung an einem Objektivrevolver,
- Figur 3:: eine schematische Darstellung der Vorrichtung nach Figur 2 in einer anderen seitlichen Darstellung und
- Figur 4:: eine schematische Darstellung der Vorrichtung nach den Figuren 2 und 3 in der Draufsicht,
- Figur 5:: eine schematische Darstellung des manuellen Verfahrensablaufs und
- Figur 6:: eine schematische Darstellung des automatischen Verfahrensablaufs.

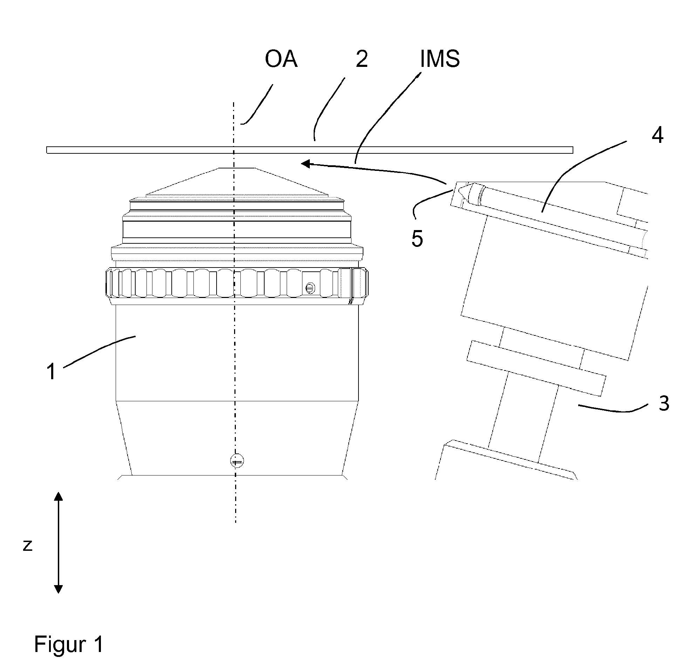

Figur 1 zeigt die erfindungsgemäße Vorrichtung mit einem Objektiv 1, einem als Deckglas ausgebildeten Probenträger 2 und einem seitlich neben dem Objektiv 1 angeordneten Autoimmersionsmodul 3 mit einer Spritzeinrichtung 4, die mit einer Düse 5 zum Zuführen eines Immersionsmittels auf einen Auftreffort am Probenträger 2, versehen ist.
Die Düse 5 ist dabei so angeordnet, dass unterschiedliche Objektive 1 bedient werden können.

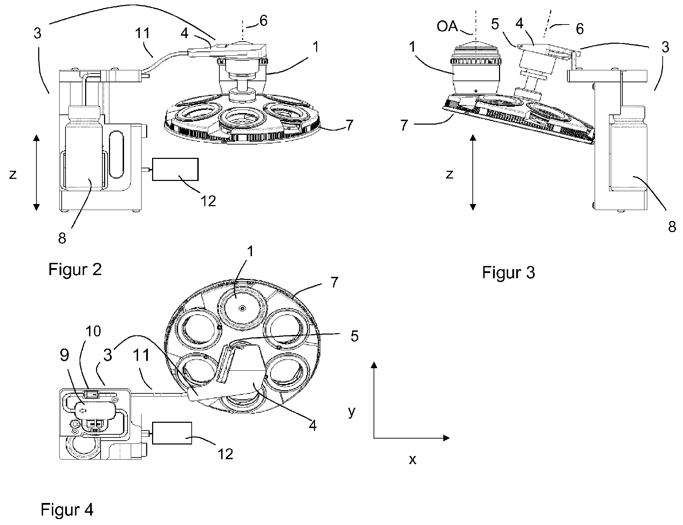

In den Figuren 2, 3 und 4 ist die Vorrichtung mit der Anordnung der Spritzeinrichtung 4 in der Achse 6 eines Objektivrevolvers 7 in verschiedenen Ansichten dargestellt. Bei diesem Ausführungsbeispiel ist die Spritzeinrichtung 4 geschützt angeordnet, ohne die Bedienbarkeit des Mikroskops zu beeinträchtigen.
Ferner zeigen die Figuren 2, 3 und 4 neben der Spritzeinrichtung 4 mit der Düse 5 das Autoimmersionsmodul 3 mit einem Immersionsmittelreservoir 8, einer Pumpe 9, einem Rückschlagventil 10 sowie einem Verbindungsschlauch 11 zur Spritzeinrichtung 4.

Zur Variierung des Auftreffortes ist der Probenträger 2 senkrecht zur optischen Achse des Objektivs 1 in x/y-Richtung und der Objektivrevolver 7 in z-Richtung axial beweglich angeordnet.

Zum Zwecke einer automatisierten Auslösung des Immersionsmittelstrahls IMS ist das Autoimmersionsmodul 3 mit einer Steuereinheit 12 verbunden.

Das erfindungsgemäße Verfahren wird nachfolgend für den manuellen und für den automatischen Betrieb näher erläutert.

Für den manuellen Betrieb reicht es aus, dass auf Knopfdruck eine definierte Menge an Immersionsmittel eingespritzt wird. Diese Funktion kann beispielsweise durch einen Softbutton auf der Oberfläche eines nicht dargestellten Touchdisplays zur Steuerung der Mikroskopfunktionen ausgelöst werden.

Alternativ kann grundsätzlich auch eine manuell betätigte Pumpe verwendet werden.
Die Kontrolle des Ergebnisses erfolgt im manuellen Betrieb durch den Benutzer.

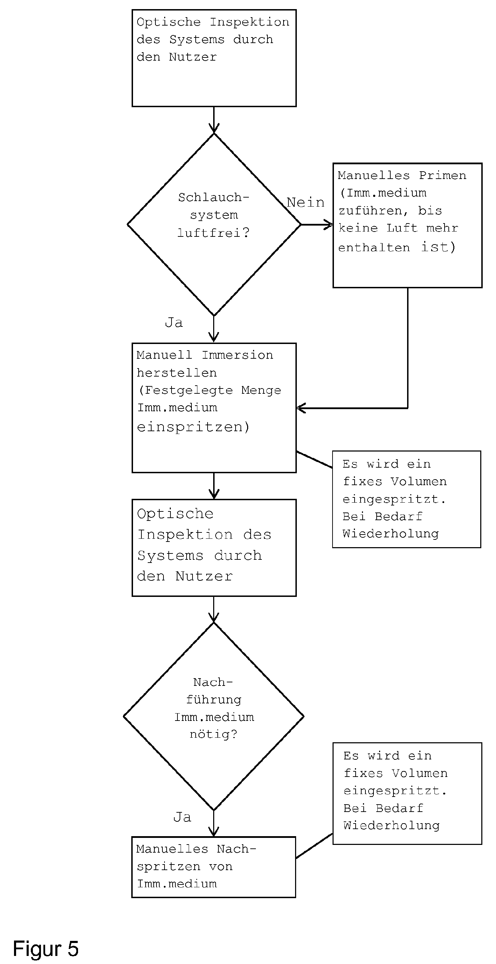

Ein sich daraus ergebender Ablauf ist in Figur 5 dargestellt.

Sofern keine Sensoren vorhanden sind, die den Istzustand der Immersionsmittelsäule überwachen, steht für einen automatischen Betrieb nur ein gesteuerter Modus zur Verfügung. Die Werte für die nachgeführte Menge an Immersionsmittel und den zeitlichen Abstand der Immersionsvorgänge müssen dann empirisch für verschiedene Experimentszenarien ermittelt werden. Die Werte des resultierenden Kennfelds sind unter anderem abhängig von der Temperatur, dem Arbeitsabstand des jeweiligen Objektivs, den Materialpaarungen und der Summe der Verfahrtischbewegungen.

Dieser Ansatz ist unvermeidlich mit einem Überschuss an Immersionsmittel verbunden. Um ein Abfließen des Immersionsmittels in das Innere des Mikroskopstativs zu vermeiden, sollte eine Schutzvorrichtung, wie beispielsweise ein "Aqua Stop" eingesetzt werden, um die überflüssigen Mengen an Immersionsmittel abzuleiten und aufzufangen.

Alternativ reichen auch über die Objektive gestülpte saugfähige Schaumstoffkragen oder eingelegte Schaumstoffmatten aus.

Der automatische Betrieb setzt zusätzlich das Vorhandensein einer Steuereinheit, beispielsweise in Form eines Mikrocontrollers, voraus.

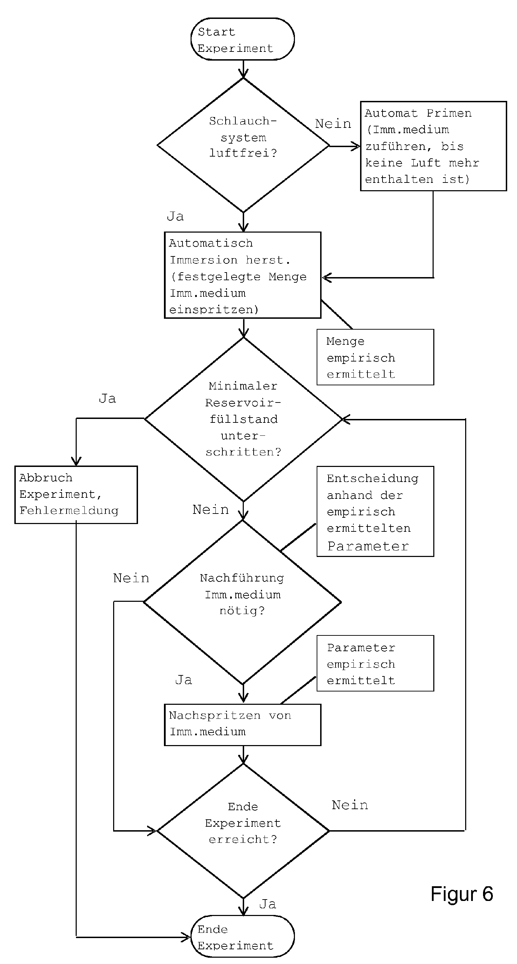

Unter der weiteren Annahme, dass eine Füllstandsüberwachung für das Immersionsmittelreservoir 8 des Speisemediums implementiert ist, sieht ein exemplarischer automatischer Ablauf beispielsweise wie in Figur 6 dargestellt aus.

### Bezugszeichenliste

- 1: Objektiv
- 2: Probenträger
- 3: Autoimmersionsmodul
- 4: Spritzeinrichtung
- 5: Düse
- 6: Achse des Objektivrevolvers
- 7: Objektivrevolver
- 8: Immersionsmittelreservoir
- 9: Pumpe
- 10: Rückschlagventil
- 11: Verbindungsschlauch
- 12: Steuereinheit
- OA: optische Achse des Objektivs
- IMS: Immersionsmittelstrahl
- x/y/z: Koordinatenachsen

## Patentansprüche

1. Vorrichtung zur Ausbildung eines Immersionsmittelfilms zwischen dem Probenträger (2) und dem Objektiv (1) eines Mikroskops, umfassend ein Autoimmersionsmodul (3) zur Zuführung des Immersionsmittels aus einem Immersionsmittelreservoir (8) auf einen Auftreffort am Probenträger oder am Verfahrtisch, bestehend aus einer, mit einer Düse (5) versehenen, Spritzeinrichtung (4), die mit einer Pumpe (9) zur Erzeugung eines Immersionsmittelstrahls (IMS) verbunden ist.

2. Vorrichtung zur Ausbildung eines Immersionsmittelfilms nach Anspruch 1, **dadurch gekennzeichnet, dass** die Spritzeinrichtung (4) in der Achse (6) eines Objektivrevolvers (7) angeordnet ist.

3. Vorrichtung zur Ausbildung eines Immersionsmittelfilms nach Anspruch 1, **dadurch gekennzeichnet, dass** die Spritzeinrichtung (4) am Stativkörper des Mikroskops befestigt ist.

4. Vorrichtung zur Ausbildung eines Immersionsmittelfilmes nach den Ansprüchen 1 bis 3, **dadurch gekennzeichnet, dass** die Spritzeinrichtung (4) derart angeordnet ist, dass der Immersionsmittelstrahl (IMS) zum Zwecke der Vermeidung von Blasen am Auftreffort geringfügig am Strahlengang des Objektivs (1) vorbeiführt.

5. Vorrichtung zur Ausbildung eines Immersionsmittelfilms nach den Ansprüchen 1 bis 2, **dadurch gekennzeichnet, dass** zum Zwecke der Variierung des Auftreffortes der Probenträger (2) senkrecht zur optischen Achse (OA) des Objektivs (1) in x/y-Richtung und der Objektivrevolver (7) in z-Richtung axial beweglich angeordnet sind.

6. Vorrichtung zur Ausbildung eines Immersionsmittelfilms nach den Ansprüchen 1 bis 5, **dadurch gekennzeichnet, dass** die Pumpe (9) und die Düse (5) zum Zwecke der Variierung des Immersionsmittelstrahls (IMS) in der Dosierung und der Geschwindigkeit des Immersionsmittelstrahls (IMS) einstellbar sind.

7. Vorrichtung zur Ausbildung eines Immersionsmittelfilms nach Anspruch 6, **dadurch gekennzeichnet, dass** zur manuellen Auslösung des Immersionsmittelstrahls (IMS), ein Betätigungselement vorhanden ist.

8. Vorrichtung zur Ausbildung eines Immersionsmittelfilms nach Anspruch 6, **dadurch gekennzeichnet, dass** zur automatisierten Auslösung des Immersionsmittelstrahls (IMS) das Autoimmersionsmodul (3) mit einer Steuereinheit (12) verbunden ist.

9. Vorrichtung zur Ausbildung eines Immersionsmittelfilms nach Anspruch 8, **dadurch gekennzeichnet, dass** die Steuereinheit (12) als Steuerrechner mit einer ZEN-Software ausgebildet ist.

10. Verfahren zur Ausbildung eines Immersionsmittelfilms zwischen dem Probenträger (2) und dem Objektiv (1) eines Mikroskops, bei dem ein dosierter Immersionsmittelstrahl (IMS) über ein Autoimmersionsmodul (3), bestehend aus einer mit einer Pumpe (9) und einer Düse (5) versehenen Spritzeinrichtung (4), auf einen Auftreffort auf den Probenträger (2) oder einem Ort am Verfahrtisch mit einer definierten Geschwindigkeit gespritzt wird.

11. Verfahren zur Ausbildung eines Immersionsmittelfilms nach Anspruch 10, **dadurch gekennzeichnet, dass** der Immersionsmittelstrahl (IMS) so ausgerichtet wird, dass er zur Minimierung von Blasenbildungen geringfügig am Strahlengang des Objektivs (1) vorbeigeführt wird.

12. Verfahren zur Ausbildung eines Immersionsmittelfilms nach Den Ansprüchen 10 und 11, **dadurch gekennzeichnet, dass** das Immergieren in der Fokuslage des Objektivs (1) erfolgt.

13. Verfahren zur Ausbildung eines Immersionsmittelfilms nach den Ansprüchen 10 bis 12, **dadurch gekennzeichnet, dass** bei Objektiven (1) mit einem geringen Arbeitsabstand der Immersionsmittelstrahl (IMS) vor der optischen Achse (OA) des Objektivs (1) auf das Objektiv (1) und den Probenträger (2) gespritzt wird und anschließend das Immersionsmittel in den Immersionsspalt kapilliert.

14. Verfahren zur Ausbildung eines Immersionsmittelfilms nach Anspruch 10, **dadurch gekennzeichnet, dass** bei Objektiven (1), deren Bauform ein direktes Einspritzen in den Immersionsspalt nicht zulässt, zunächst ein Objektiv geringerer Bauhöhe oder eine leere Position des Objektivrevolvers (7) in die optische Achse (OA) des Objektivs (1) geschwenkt wird, anschließend das Aufbringen einer geringen Dosierung des Immersionsmittels auf den Probenträger (2) erfolgt und im Anschluss daran bei Rückstellung des zu verwendenden Objektivs (1) in die Fokuslage sich die Immersion automatisch einstellt.

15. Verfahren zur Ausbildung eines Immersionsmittelfilms nach den Ansprüchen 10 bis 13, **dadurch gekennzeichnet, dass** zum Zwecke der Entfernung von Blasen im Immersionsmittel der Abstand zwischen Objektiv (1) und Probenträger (2) vergrößert wird, wodurch die Immersionssäule gestreckt und eingeschnürt wird und enthaltene Blasen aus dem Immersionsmittel getrieben werden.

16. Verfahren zur Ausbildung eines Immersionsmittelfilms nach den Ansprüchen 10 bis 13, **dadurch gekennzeichnet, dass** zum Zwecke der Entfernung von Blasen im Immersionsmittel die Probe senkrecht zur optischen Achse (OA) in x/y-Richtung verfahren wird, bis am Probenträger (2) haftende Blasen die Immersionssäule verlassen und platzen.

17. Verfahren zur Ausbildung eines Immersionsmittelfilms nach den Ansprüchen 10 bis 13, **dadurch gekennzeichnet, dass** zum Zwecke der Entfernung von Blasen im Immersionsmittel der Objektivrevolver (7) um ca. 10° gedreht wird, wobei die Immersionssäule aus der optischen Achse (OA)gezogen wird und dort am Probenträger (2) befindlichen Blasen die Immersionssäule verlassen und platzen.

18. Verfahren zur Ausbildung eines Immersionsmittelfilms, **gekennzeichnet durch** Kombinationen aus den Ansprüchen 15 und 16 und/oder 15 und 17.
